# EUROPEAN PATENT APPLICATION

(11) **EP 4 431 235 A1**
(43) Date of publication of application: **18.09.2024**
(21) Application number: 21964180.0
(22) Date of filing: 12.11.2021
(51) Int. Cl.: B24B 37/24, B24B 37/22, B24D 11/00, C08J 7/04

(54) **COMPOSITE POLISHING PAD INCLUDING HIGHLY ABRASION-RESISTANT THIN FILM COATING BOUND WITH CARBON NANOTUBES, AND METHOD FOR PRODUCING SAME**

(71) Applicant: KPX Chemical Co., Ltd., Seoul 04143 (KR); Korea Advanced Institute of Science and Technology, Daejeon 34141 (KR)
(72) Inventor: MIN, Byung Ju, Incheon 22734 (KR); HONG, Seok Ji, Hwaseong-si, Gyeonggi-do 18444 (KR); KIM, Seung Geun, Hwaseong-si, Gyeonggi-do 18466 (KR); CHOI, Jung Hee, Seoul 03709 (KR); KANG, Min Woo, Yongin-si, Gyeonggi-do 17103 (KR); OH, Nam Gue, Hwaseong-si, Gyeonggi-do 18467 (KR); KIM, Sanha, Daejeon 34141 (KR); JEONG, Ji Hun, Daejeon 34141 (KR); RYU, Hyun Jun, Daejeon 34141 (KR); KANG, Sukkyung, Daejeon 34141 (KR); KIM, Seong Jae, Daejeon 34141 (KR)
(74) Representative: dompatent von Kreisler Selting Werner - Partnerschaft von Patent- und Rechtsanwälten mbB
(86) International application number: PCT/KR2021/016560
(87) International publication number: WO 2023/085470

(57) **Abstract**

The present invention provides a composite polishing pad for CMP, and a method for producing the same. The composite polishing pad for CMP comprises: a soft polymer substrate layer including a plurality of protrusions formed on the upper surface thereof; a carbon nanotube layer including carbon nanotubes embedded in and bound to the upper portion of the substrate layer; and a hard polymer coating layer having the carbon nanotubes protruding outwardly on the upper portion of the carbon nanotube layer embedded and bound thereto.

## Description

### [Technical Field]

The present invention relates to a composite polishing pad including highly abrasion-resistant thin film coating bound with carbon nanotubes, and a method for producing the same.

### [Background Art]

Chemical mechanical polishing (CMP) is a key process for flattening and mirroring a wafer or a glass panel, and the polishing is performed by mechanical and chemical action of a polishing pad and a slurry containing nanoparticles.

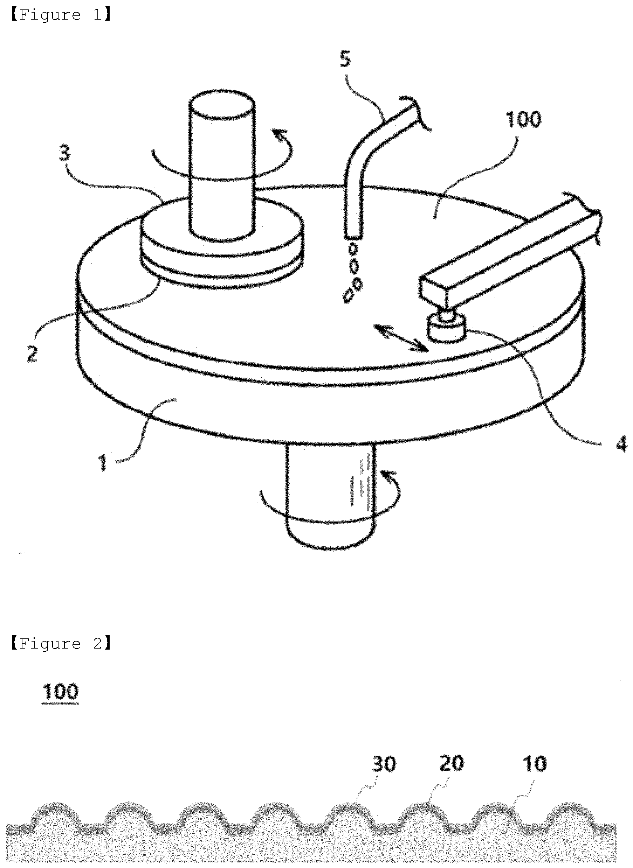

FIG. 1 is a schematic diagram of a CMP apparatus. The CMP apparatus performs polishing by, while a carrier 3 firmly fixes a polishing object 2 (for example: wafer), pressurizing the polishing object onto a surface of a polishing pad 100 fixed on a rotary table 1. Specifically, while the carrier 3 and the rotary table 1 each independently rotate, a liquid slurry (abrasive) is applied to the polishing pad 100 from a nozzle 5, and as a result, chemical and mechanical polishing is obtained. In addition, as a conditioner 4 is pressurized against the polishing pad 100 at a position separated from the polishing object 1 during the polishing process, the surface of the polishing pad 100 is made to be roughened, and the rough surface state of the polishing pad is maintained.

In the CMP apparatus, a polyurethane-based polishing pad is generally used. However, existing polyurethane-based polishing pads have a disadvantage of short lifetime since abrasion progresses rapidly due to friction with high hardness nanoparticles, a polishing object and a diamond conditioner during a polishing process. In addition, existing polyurethane-based polishing pads have a disadvantage of not guaranteeing uniform polishing performance due to irregular surface roughness.

### [Prior Art Document]

### [Patent Document]

Korean Laid-Open Patent Publication No. 10-2021-0002429

### [Disclosure]

### [Technical Problem]

The present invention has been devised to solve the conventional problems as described above, and is directed to providing a composite polishing pad for CMP having significantly improved polishing performance and lifetime, and a method for efficiently producing the same.

### [Technical Solution]

In order to achieve the above object, the present invention provides a composite polishing pad for CMP, including:
a soft polymer substrate layer including a plurality of protrusions formed on an upper surface thereof;
a carbon nanotube layer including carbon nanotubes embedded in and bound to the upper portion of the substrate layer; and
a hard polymer coating layer having the carbon nanotubes protruding outwardly on the upper portion of the carbon nanotube layer embedded and bound thereto.

In one embodiment of the present invention, the carbon nanotube layer may include carbon nanotubes embedded in the soft polymer substrate layer and the hard polymer coating layer in a vertical direction.

In one embodiment of the present invention, the carbon nanotubes embedded in the soft polymer substrate layer and the hard polymer coating layer in a vertical direction may account for 50% or more of the total carbon nanotubes of the carbon nanotube layer.

In one embodiment of the present invention, the carbon nanotubes of the carbon nanotube layer may be embedded in the soft polymer substrate layer and the hard polymer coating layer in an irregular net form structure.

In one embodiment of the present invention, the irregular net form structure may be a structure formed by scattering the carbon nanotubes so that some thereof overlap each other.

In one embodiment of the present invention, the soft polymer substrate layer may have shore hardness of 20D to 45D, and the hard polymer coating layer may have shore hardness of 45D to 70D.

In one embodiment of the present invention, the protrusion may have a maximum width of 10 um to 500 um, and a height of 3 um to 150 um.

In one embodiment of the present invention, the carbon nanotubes may have a diameter of 1 nm to 50 nm, and a length of 1 um to 30 um.

In one embodiment of the present invention, the hard polymer coating layer may have a thickness of 1 um to 50 um.

In one embodiment of the present invention, the protrusion may have a hemisphere-like shape.

In addition, the present invention provides a method for producing a composite polishing pad for CMP, including the steps of:
(a) preparing a substrate on which carbon nanotubes are arranged in a vertical direction;
(b) forming a soft polymer substrate layer with a flat upper surface by coating a soft polymer on the upper portion of the carbon nanotubes;
(c) separating and removing the substrate from the carbon nanotubes;
(d) exposing a portion of the carbon nanotubes by removing a certain thickness of the soft polymer substrate through plasma etching the substrate-removed surface;
(e) forming a hard polymer coating layer by coating a hard polymer on the carbon nanotube-exposed surface so that an upper surface thereof is flat; and
(f) forming a plurality of protrusions including the soft polymer substrate layer, the carbon nanotube layer arranged in a vertical direction, and the hard polymer coating layer by conducting an embossing treatment from the upper surface direction of the hard polymer coating layer.

In one embodiment of the present invention, the embossing treatment in the step (f) may be conducted by pressurizing the upper surface of the hard polymer coating layer with a mold having a plurality of protrusions engraved therein under a heating condition.

In one embodiment of the present invention, the step (b) and the step (e) may be performed under vacuum.

In addition, the present invention provides a method for producing a composite polishing pad for CMP, including the steps of:
(a) scattering carbon nanotubes on a mold having a plurality of protrusions engraved therein so that some thereof overlap each other;
(b) forming a soft polymer substrate layer with a flat upper surface by coating a soft polymer on the upper portion of the carbon nanotubes;
(c) demolding the mold;
(d) exposing a portion of the carbon nanotubes by removing a certain thickness of the soft polymer substrate through plasma etching the demolded surface; and
(e) forming a hard polymer coating layer by coating a hard polymer on the carbon nanotube-exposed surface.

In addition, the present invention provides a method for producing a composite polishing pad for CMP, including the steps of:
(a) scattering carbon nanotubes on a substrate so that some thereof overlap each other;
(b) forming a soft polymer substrate layer with a flat upper surface by coating a soft polymer on the upper portion of the carbon nanotubes;
(c) separating and removing the substrate from the carbon nanotubes;
(d) exposing a portion of the carbon nanotubes by removing a certain thickness of the soft polymer substrate through plasma etching the substrate-removed surface;
(e) forming a hard polymer coating layer by coating a hard polymer on the carbon nanotube-exposed surface so that an upper surface thereof is flat; and
(f) forming a plurality of protrusions including the soft polymer substrate layer, the carbon nanotube layer arranged in a vertical direction, and the hard polymer coating layer by conducting an embossing treatment from the upper surface direction of the hard polymer coating layer.

In one embodiment of the present invention, the embossing treatment in the step (f) may be conducted by pressurizing the upper surface of the hard polymer coating layer with a mold having a plurality of protrusions engraved therein under a heating condition.

In one embodiment of the present invention, the step (b) and the step (e) may be performed under vacuum.

### [Advantageous Effects]

The composite polishing pad for CMP of the present invention includes a soft polymer substrate layer and a hard polymer coating layer bound with carbon nanotubes, thereby providing improved polishing performance and lifetime.

In addition, a method for producing a composite polishing pad for CMP of the present invention provides a method capable of efficiently producing the polishing pad.

### [Description of Drawings]

FIG. 1 is a perspective view illustrating a structure of a typical CMP apparatus.
FIG. 2 is a cross-sectional view schematically showing one embodiment of a composite polishing pad of the present invention.
FIG. 3 is a cross-sectional view schematically showing a structure of a protrusion included in the composite polishing pad as one embodiment of the present invention.
FIG. 4 is a cross-sectional view schematically showing another embodiment of a composite polishing pad of the present invention.
FIG. 5 is a cross-sectional view schematically showing a structure of a protrusion included in the composite polishing pad as another embodiment of the present invention.
FIG. 6 is a diagram schematically illustrating a contact pattern between a fine protrusion, an abrasive particle and a polishing object depending on differences in mechanical properties of the fine protrusion provided in the polishing pad.
FIG. 7 is a diagram schematically showing a method for producing a composite polishing pad as one embodiment of the present invention.
FIG. 8 is a diagram schematically showing a method for producing a composite polishing pad as another embodiment of the present invention.
FIG. 9 illustrates a SEM picture of a fine protrusion formed in the composite polishing pad produced according to the present invention.
FIG. 10 illustrates a SEM picture obtained by photographing a cut surface of the composite polishing pad as one embodiment of the present invention.

### [Best Mode]

Hereinafter, embodiments of the present invention will be described in detail with reference to accompanying drawings so that those skilled in the art may readily implement the present invention. However, the present invention may be embodied in various different forms, and is not limited to the embodiments described herein. The same reference numerals are used for like elements throughout the specification.

When a certain constituent is referred to be "connected to, provided in, or installed on" another constituent, it needs to be understood that the certain constituent may be directed connected to or installed on the other constituent, but another constituent may also be present in between.

A composite polishing pad for CMP of the present invention includes, as shown in FIG. 2 to FIG. 5,
a soft polymer substrate layer 10 including a plurality of protrusions formed on an upper surface thereof;
a carbon nanotube layer 20 including carbon nanotubes embedded in and bound to the upper portion of the substrate layer; and
a hard polymer coating layer 30 having the carbon nanotubes protruding outwardly on the upper portion of the carbon nanotube layer embedded and bound thereto.

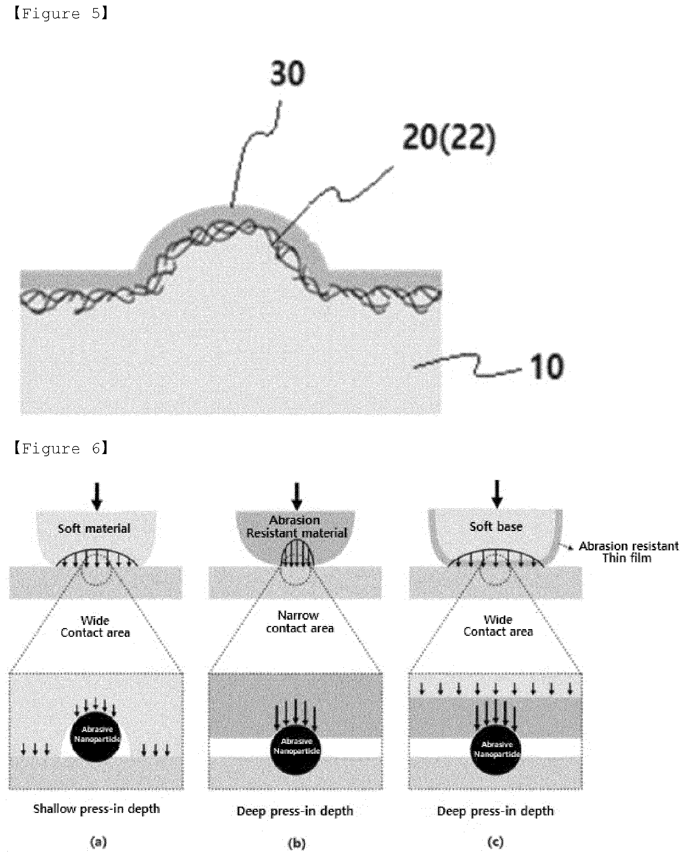

FIG. 6 shows a contact pattern between a fine protrusion, an abrasive particle and a polishing object (for example: wafer) varying by differences in mechanical properties of the fine protrusion provided in the polishing pad.

As shown in FIG. 6A, a fine protrusion having mechanically soft properties is readily deformed, thereby having a wide contact area, but is not able to press-in and polish a surface of a polishing object since a sufficient load is not applied to abrasive particles. In addition, it has a disadvantage in that it is readily worn, and thus continuous use as a polishing pad is impossible.

On the other hand, a fine protrusion having mechanically strong properties (for example: fine protrusion made of a material with high abrasion resistance) has an advantage of, as shown in FIG. 6B, being able to deeply press-in and polish a surface of a polishing object by applying a load to abrasive particles, but has a disadvantage of not forming a wide contact area with the polishing object.

Accordingly, inventors of the present invention have tried to provide a polishing pad having a fine protrusion capable of applying a sufficient load to abrasive particles while securing a wide contact area with a polishing object, and have found out that, as shown in FIG. 6C, the above-described effect may be obtained when forming a coating layer on a surface of a fine protrusion having mechanically soft properties using a material having mechanically strong properties (for example: material with high abrasion resistance).

In other words, when using a polishing pad including such a fine protrusion, a wide contact area may be secured due to the fine protrusion portion made of a soft material, and abrasive particles may be deeply pressed-in due to the highly abrasion resistant coating layer on the surface. Accordingly, it is also possible to extend polishing efficiency and a lifetime of the polishing pad.

However, although a fine protrusion having such a structure (FIG. 6C) provides an excellent effect compared to an existing fine protrusion, the fine protrusion substrate portion material and the coating layer material are different, which leads to a disadvantage in that bonding strength therebetween is weak. In other words, when a polishing pad having a fine protrusion with such a structure is used in an actual polishing process, it has a disadvantage in that the coating portion is separated from the substrate portion and using for a long period of time is difficult. In addition, a coating layer with strong mechanical properties may reduce polishing efficiency due to insufficient holding power of abrasive particles.

Accordingly, in order to solve such disadvantages, the composite polishing pad of the present invention includes a carbon nanotube layer 20 formed by embedding carbon nanotubes in a soft polymer substrate layer 10 and a hard polymer coating layer 30 as shown in FIG. 2 to FIG. 5.

Due to such a characteristic constitution, the composite polishing pad of the present invention has a wide contact area with a polishing object, and is capable of deeply pressing-in abrasive particles to the polishing object. In addition, the soft polymer substrate layer and the hard polymer coating layer are bound by carbon nanotubes, thereby forming a strong bond, and thus greatly extending the lifetime. In other words, since the carbon nanotube layer 20 increases a bonding area between the soft polymer substrate layer 10 and the hard polymer coating layer 30, bonding strength increases, which greatly extends a lifetime of the polishing pad.

In addition, when abrasive particles are pressed into the hard polymer coating layer, the carbon nanotubes placed inside the hard polymer coating layer function to support the abrasive particles, and accordingly, holding power of the abrasive particles is improved, which is effective in improving polishing efficiency as well.

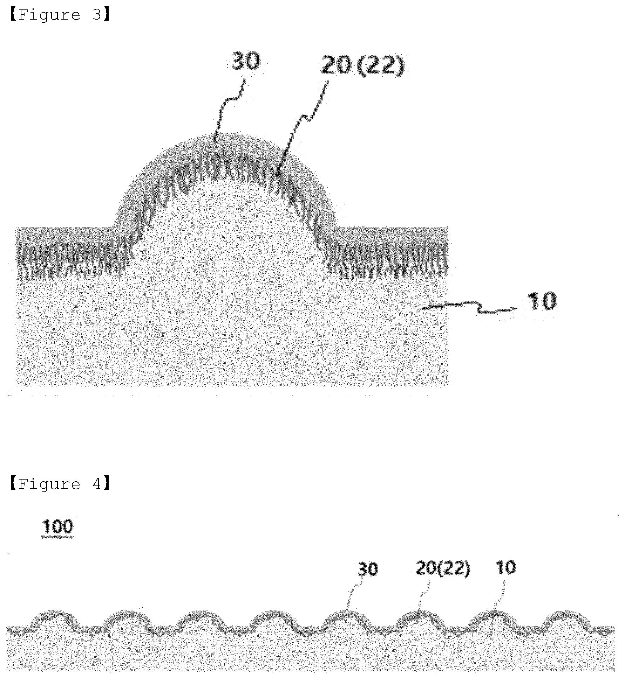

In one embodiment of the present invention, the carbon nanotube layer 20 may include, as shown in FIG. 2 and FIG. 3, carbon nanotubes 22 embedded in the soft polymer substrate layer 10 and the hard polymer coating layer 30 in a vertical direction.

In one embodiment of the present invention, the carbon nanotubes embedded in the soft polymer substrate layer 10 and the hard polymer coating layer 30 in a vertical direction may account for 50% or more, preferably 60% or more, more preferably 80% or more, and even more preferably 90% or more of the total carbon nanotubes of the carbon nanotube layer.

The carbon nanotubes arranged in a vertical direction described above may be obtained by, for example, vapor-growing carbon nanotubes on a substrate to have a regular interval, and forming the carbon nanotube layer 20 by embedding and binding the carbon nanotubes to the upper portion of the soft polymer substrate layer 10 may be obtained by, for example, coating a soft polymer on the substrate, on which the carbon nanotubes are arranged in a vertical direction, to a higher thickness than the carbon nanotubes, and, after removing the substrate, removing the soft polymer substrate layer to a certain thickness by plasma etching the substrate-removed surface. Such a method will be described in detail below.

In one embodiment of the present invention, the arrangement in a vertical direction does not mean a vertical arrangement in a strict sense, and means artificially arranging the carbon nanotubes in close to a vertical direction. The arrangement in a vertical direction includes, for example, the carbon nanotubes being arranged on the soft polymer substrate layer in a spike shape. Specifically, in the arrangement in a vertical direction, the angle formed between the carbon nanotubes and the upper surface of the soft polymer substrate layer may be from 60 degrees to 90 degrees, from 70 degrees to 90 degrees, or from 80 degrees to 90 degrees.

In one embodiment of the present invention, the carbon nanotubes of the carbon nanotube layer 20 may be, as shown in FIG. 4 and FIG. 5, embedded in the soft polymer substrate layer 10 and the hard polymer coating layer 30 in an irregular net form structure.

The irregular net form structure may be a structure formed by scattering the carbon nanotubes so that some thereof overlap. The meaning of scattering means disposing the carbon nanotubes through dispersion, and the meaning of overlap means that some of the carbon nanotubes overlap to strengthen a three-dimensional structure.

In one embodiment of the present invention, the soft polymer substrate layer 10 may have shore hardness of 20D to 45D, and the hard polymer coating layer 30 may have shore hardness of 45D to 70D. When the hardness of the soft polymer substrate layer and the hard polymer coating layer satisfies the above-mentioned range, a wide contact area may be formed between the protrusion and a polishing object, and polishing efficiency may be improved as well.

In one embodiment of the present invention, as a soft polymer material with shore hardness of 20D to 45D forming the soft polymer substrate layer 10, one or more types selected from the group consisting of a polyurethane resin, a UV curable resin, a silicone resin and the like may be used. However, the material is not limited thereto, and materials known in the art may be used without limit as long as they do not adversely affect the present invention.

In addition, as a hard polymer material with shore hardness of 45D to 70D forming the hard polymer coating layer 30, one or more types selected from the group consisting of a polyurethane resin, a UV curable resin, a silicone resin and the like may be used. However, the material is not limited thereto, and materials known in the art may be used without limit as long as they do not adversely affect the present invention.

In one embodiment of the present invention, the protrusion may have a maximum width of 10 um to 500 um, and a height of 3 um to 150 um. However, the maximum width and the height are not limited to these ranges, and may be properly adjusted depending on the polishing object and the polishing condition.

In one embodiment of the present invention, the carbon nanotubes may have a diameter of 1 nm to 50 nm, and a length of 1 µm to 30 µm. However, the diameter and the length are not limited to these ranges, and may be properly adjusted depending on the polishing object and the polishing condition.

In one embodiment of the present invention, the hard polymer coating layer 30 may have a thickness of 1 µm to 30 um, and more preferably 3 µm to 20 um. The coating layer thickness being less than the above-mentioned thickness is not preferred since the carbon nanotubes are readily exposed by abrasion, and the coating layer being too thick is not preferred since abrasive particle holding power is reduced by the carbon nanotubes. However, the above-mentioned range may be properly adjusted depending on the carbon nanotube length, the polishing object and the polishing condition.

In one embodiment of the present invention, the soft polymer substrate layer 10 may have a thickness of 1 mm to 20 mm, and more preferably 2 mm to 10 mm.

In one embodiment of the present invention, the protrusion may have, for example, a hemisphere-like shape, however, the shape is not particularly limited. As shown in FIG. 2 to FIG. 5, the protrusion includes the soft polymer substrate layer 10, the carbon nanotube layer 20 arranged in a vertical direction, and the hard polymer coating layer 30, and protrudes in an upward direction of the composite polishing pad.

In one embodiment of the present invention, the soft polymer substrate layer 10 and the hard polymer coating layer 30 may have a structure in which they are in contact with other in a space between the carbon nanotubes disposed in the carbon nanotube layer 20, as shown in FIG. 2 and FIG. 5.

In one embodiment of the present invention, the composite polishing pad may have a structure in which pores do not exist between a soft polymer substrate layer 10 and carbon nanotubes embedded in and bound to the substrate layer 10. When pores do not exist, the soft polymer substrate layer 10 and the carbon nanotubes embedded in and bound to the substrate layer 10 may be bound more firmly, which is preferred.

In addition, the composite polishing pad may have a structure in which pores do not exist between a hard polymer coating layer 30 and carbon nanotubes embedded in and bound to the coating layer 30. When pores do not exist, the hard polymer coating layer 10 and the carbon nanotubes embedded in and bound to the coating layer 10 may be bound more firmly, which is preferred.

In addition, as a whole, the composite polishing pad may have a structure in which pores do not exist at interfaces between the substrate layer 10, the carbon nanotube layer 20 and the coating layer 30. Such a structure may be formed by forming bonds between the layers under vacuum as to be described below. The expression that pores do not exist may mean that pores do not substantially exist.

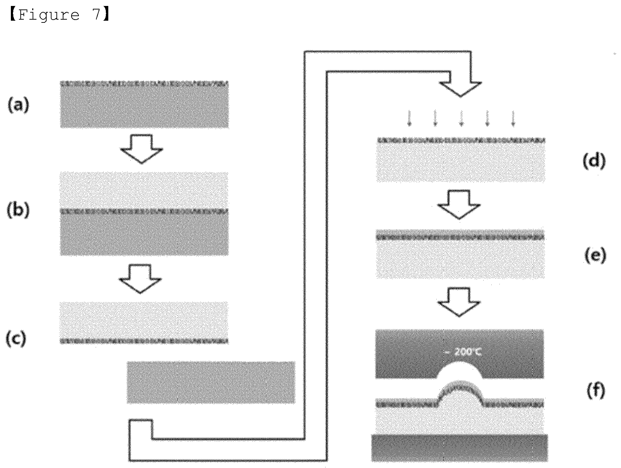

The present invention also provides a method for producing a composite polishing pad for CMP, and the production method may include, as shown in FIG. 7, the following steps (a) to (f):
(a) preparing a substrate on which carbon nanotubes are arranged in a vertical direction;
(b) forming a soft polymer substrate layer with a flat upper surface by coating a soft polymer on the upper portion of the carbon nanotubes;
(c) separating and removing the substrate from the carbon nanotubes;
(d) exposing a portion of the carbon nanotubes by removing a certain thickness of the soft polymer substrate through plasma etching the substrate-removed surface;
(e) forming a hard polymer coating layer by coating a hard polymer on the carbon nanotube-exposed surface so that an upper surface thereof is flat; and
(f) forming a plurality of protrusions including the soft polymer substrate layer, the carbon nanotube layer arranged in a vertical direction, and the hard polymer coating layer by conducting an embossing treatment from the upper surface direction of the hard polymer coating layer.

Descriptions on the composite polishing pad for CMP provided above may be applied to the production method as they are. Therefore, repeated descriptions will not be provided.

In the step (a), the substrate on which carbon nanotubes are arranged in a vertical direction may be prepared using a method of, for example, forming a catalyst layer such as Fe/Al₂O₃ on a substrate such as a silicon substrate or a metal foil substrate by physical vapor deposition (PVD), and forming carbon nanotubes arranged in a vertical direction on the catalyst layer-formed substrate by chemical vapor deposition (CVD). However, the method for preparing a substrate on which carbon nanotubes are arranged in a vertical direction is not limited to the above-described method, and methods known in the art may also be used.

The coating of the step (b) and step (e) may be performed using methods known in the art. For example, methods such as spin coating and spray coating may be used, and the coating may be performed using other methods known in the art.

The separating of the substrate in the step (c) may be performed using methods such as mechanical silicon separation (release) and silicon etching.

The plasma etching method in the step (d) is not particularly limited, and methods known in the art may be used.

The embossing treatment in the step (f) may be conducted by pressurizing the upper surface of the hard polymer coating layer with a mold having a plurality of protrusions engraved therein under a heating condition. Specifically, as shown in FIG. 7, a micropattern-formed mold may be used. Herein, by supplying heat to the mold, the embossing treatment may be conducted while the mold is in a heated state. In this case, the mold temperature may be from 200°C to 250°C, but is not limited thereto. As the mold, those made of metal materials such as nickel and copper may be used, and the micropattern may be manufactured using a micro electro-mechanical system (MEMS) process.

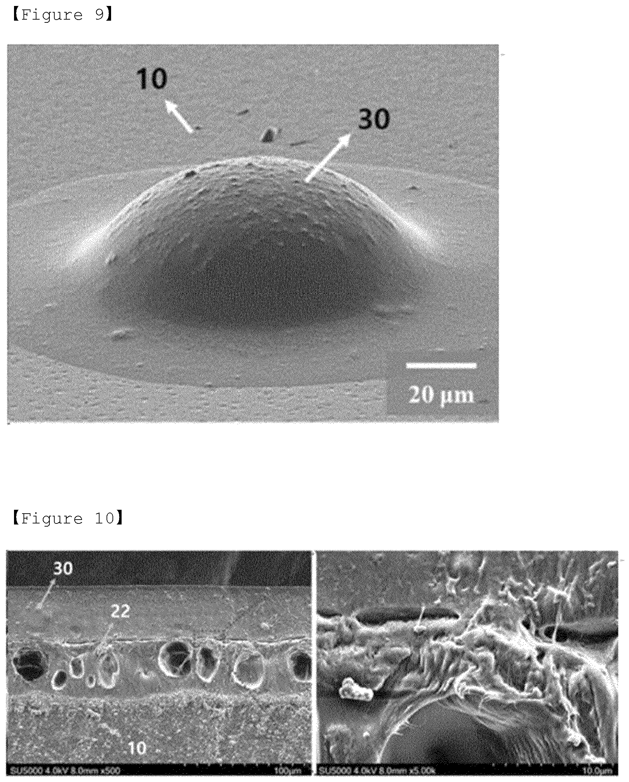

The composite polishing pad produced using the above-described method has a protrusion as illustrated in the SEM picture of FIG. 9. In addition, the composite polishing pad has an inner structure as shown in FIG. 10. Referring to FIG. 10, it may be identified that the composite polishing pad of the present invention has a form in which the soft polymer substrate layer 10 and the hard polymer coating layer 30 are bound by the carbon nanotubes 22.

In one embodiment of the present invention, one or more of step (b) and step (e) described above may be performed under vacuum. Coating under vacuum is preferred since it may prevent formation of pores between the carbon nanotubes and the soft polymer substrate layer, and the carbon nanotubes may be more strongly embedded and bound accordingly.

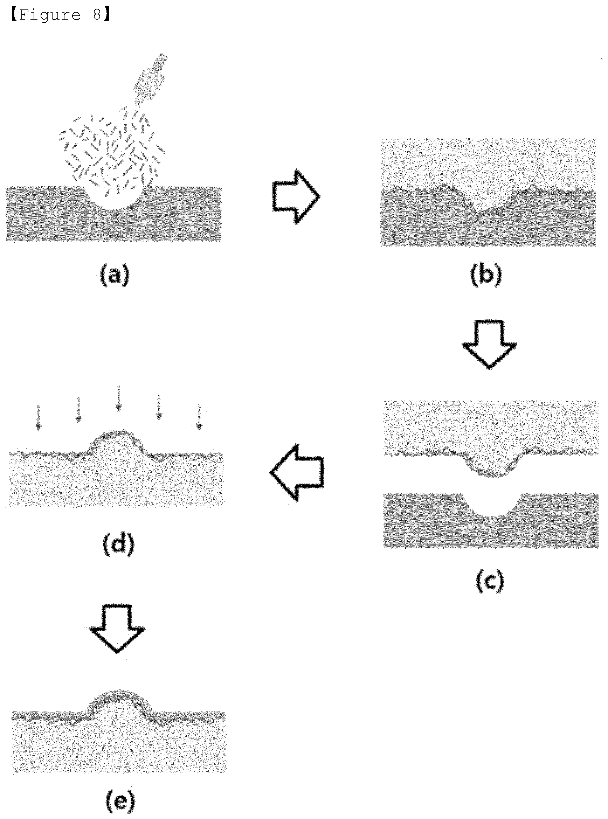

The present invention also provides another method for producing a composite polishing pad for CMP, and the production method may include, as shown in FIG. 8, the following steps (a) to (e) :
(a) scattering carbon nanotubes on a mold having a plurality of protrusions engraved therein so that some thereof overlap each other;
(b) forming a soft polymer substrate layer with a flat upper surface by coating a soft polymer on the upper portion of the carbon nanotubes;
(c) demolding the mold;
(d) exposing a portion of the carbon nanotubes by removing a certain thickness of the soft polymer substrate through plasma etching the demolded surface; and
(e) forming a hard polymer coating layer by coating a hard polymer on the carbon nanotube-exposed surface.

Descriptions on the composite polishing pad for CMP and the method for producing the same provided above may be applied to the production method as they are. Therefore, repeated descriptions will not be provided.

The method of scattering carbon nanotubes so that some thereof overlap each other in the step (a) may be performed using methods known in the art. For example, as shown in FIG. 8, a method of spraying carbon nanotubes onto a mold through a nozzle may be used. Herein, the carbon nanotubes may be sprayed in a dispersed form in a solvent. Examples of the solvent may include water, ethanol, isopropyl alcohol and the like, but are not limited thereto.

The steps (b), (d) and (e) may be performed in the same manner as in another method described above.

The present invention also provides another method for producing a composite polishing pad for CMP, and the production method may include the following steps (a) to (f):
(a) scattering carbon nanotubes on a substrate so that some thereof overlap each other;
(b) forming a soft polymer substrate layer with a flat upper surface by coating a soft polymer on the upper portion of the carbon nanotubes;
(c) separating and removing the substrate from the carbon nanotubes;
(d) exposing a portion of the carbon nanotubes by removing a certain thickness of the soft polymer substrate through plasma etching the substrate-removed surface;
(e) forming a hard polymer coating layer by coating a hard polymer on the carbon nanotube-exposed surface so that an upper surface thereof is flat; and
(f) forming a plurality of protrusions including the soft polymer substrate layer, the carbon nanotube layer arranged in a vertical direction, and the hard polymer coating layer by conducting an embossing treatment from the upper surface direction of the hard polymer coating layer.

Descriptions on the composite polishing pad for CMP and another method for producing the same provided above may be applied to the production method as they are. Therefore, repeated descriptions will not be provided.

Hereinafter, the present invention will be described in detail with reference to examples in order to specifically describe the present invention. However, the examples according to the present invention may be modified to various different forms, and the scope of the present invention is not to be construed as being limited to the examples described below. Examples of the present invention are provided in order to more fully describe the present invention to those having average knowledge in the art.

### Example 1: Production of Composite Polishing Pad

On a silicon substrate having a thickness of 525 um, a Fe/Al₂O₃ catalyst layer was deposited by physical vapor deposition (PVD), and a substrate in which multi-walled carbon nanotubes having a diameter of about 10 nm and a length of 3 um are arranged in a vertical direction on the substrate by chemical vapor deposition (CVD) was prepared. Herein, it was identified that the carbon nanotubes were formed at a density of about 10¹¹/cm².

On the upper portion of the carbon nanotubes arranged in a vertical direction on the substrate, a polyurethane resin having shore hardness of 30D (trade name: Smooth-Cast^{™} 30D, manufactured by Smooth-On) was coated under a vacuum atmosphere to form a soft polymer substrate layer having a thickness of 5 mm based on the upper end portion of the carbon nanotubes.

After curing the soft polymer substrate layer, the silicon was mechanically separated to transfer the carbon nanotubes to the polyurethane. Then, the substrate-removed surface was plasma etched to remove the soft polymer substrate to a thickness of 1 um, and the carbon nanotubes were exposed. After that, a polyurethane resin having shore hardness of 45D (trade name: Smooth-Cast^{™} 45D, manufactured by Smooth-On) was coated on the carbon nanotube-exposed surface through spin coating under a vacuum atmosphere to form a hard polymer coating layer having a thickness of 5 um based on the upper end portion of the carbon nanotubes.

After curing the hard polymer coating layer, an embossing treatment was conducted by pressurization at 20O°C using a mold in which a plurality of hemispherical protrusions having a radius of 50 um are engraved, and as a result, a composite polishing pad of the present invention was produced.

### Example 2: Production of Composite Polishing Pad

A carbon nanotube dispersion was prepared by dispersing carbon nanotubes into isopropyl alcohol. Then, the dispersion was coated on a mold in which a plurality of hemispherical protrusions having a radius of 50 um are engraved using a pneumatic nozzle. On the carbon nanotube-coated mold, a polyurethane resin (50 um) having shore hardness of 30D was coated under a vacuum atmosphere to form a soft polymer substrate layer having a thickness of 5 mm based on the upper end portion of the carbon nanotubes.

After curing the soft polymer substrate layer, the mold was separated and removed. Then, the mold-removed surface was plasma etched to remove the soft polymer substrate to a thickness of 1 um, and the carbon nanotubes were exposed. After that, a polyurethane resin having shore hardness of 45D (trade name: Smooth-Cast^{™} 45D, manufactured by Smooth-On) was coated on the carbon nanotube-exposed surface through spin coating to form a hard polymer coating layer having a thickness of 5 um based on the upper end portion of the carbon nanotubes.

### Example 3: Production of Composite Polishing Pad

A carbon nanotube dispersion was prepared by dispersing carbon nanotubes into isopropyl alcohol. Then, the dispersion was coated on a polypropylene substrate placed on a hot plate heated to 60°C using a pneumatic nozzle. On the carbon nanotube-coated mold, a polyurethane resin having shore hardness of 30D (trade name: Smooth-Cast^{™} 30D, manufactured by Smooth-On) was coated under a vacuum atmosphere to form a soft polymer substrate layer having a thickness of 5 mm based on the upper end portion of the carbon nanotubes.

After curing the soft polymer substrate layer, the substrate was separated and removed. Then, the substrate-removed surface was plasma etched to remove the soft polymer substrate to a thickness of 1 um, and the carbon nanotubes were exposed. After that, a polyurethane resin having shore hardness of 45D (trade name: Smooth-Cast^{™} 45D, manufactured by Smooth-On) was coated on the carbon nanotube-exposed surface through spin coating to form a hard polymer coating layer having a thickness of 5 um based on the upper end portion of the carbon nanotubes.

After curing the hard polymer coating layer, an embossing treatment was conducted by pressurization at 20O°C using a mold in which a plurality of hemispherical protrusions having a radius of 50 um are engraved, and as a result, a composite polishing pad of the present invention was produced.

### Comparative Example 1: Production of Composite Polishing Pad

A polyurethane resin having shore hardness of 30D (trade name: Smooth-Cast^{™} 30D, manufactured by Smooth-On) was coated to form a soft polymer substrate layer having a thickness of 5 mm.

After curing the soft polymer substrate layer, a polyurethane resin having shore hardness of 45D (trade name: Smooth-Cast^{™} 45D, manufactured by Smooth-On) was coated on the upper portion of the soft polymer substrate layer to form a hard polymer coating layer having a thickness of 5 um.

After curing the hard polymer coating layer, an embossing treatment was conducted by pressurization at 20O°C using a mold in which a plurality of hemispherical protrusions having a radius of 50 um are engraved, and as a result, a composite polishing pad was produced.

### [Reference Numeral]

| | | | |
|---|---|---|---|
| 1: | Rotary Table | 2: | Wafer |
| 3: | Carrier (Rotating Head) | 4: | Conditioner |
| 5: | Nozzle | | |
| 10: | Soft Polymer Substrate Layer | | |
| 20: | Carbon Nanotube Layer | 22: | Carbon Nanotube |
| 30: | Hard Polymer Coating Layer | | |
| 100: | Composite Polishing Pad | | |

## Claims

1. A composite polishing pad for CMP, comprising:
a soft polymer substrate layer including a plurality of protrusions formed on an upper surface thereof;
a carbon nanotube layer including carbon nanotubes embedded in and bound to the upper portion of the substrate layer; and
a hard polymer coating layer having the carbon nanotubes protruding outwardly on the upper portion of the carbon nanotube layer embedded and bound thereto.

2. The composite polishing pad for CMP of claim 1, wherein the carbon nanotube layer includes carbon nanotubes embedded in the soft polymer substrate layer and the hard polymer coating layer in a vertical direction.

3. The composite polishing pad for CMP of claim 2, wherein the carbon nanotubes embedded in the soft polymer substrate layer and the hard polymer coating layer in a vertical direction account for 50% or more of the total carbon nanotubes of the carbon nanotube layer.

4. The composite polishing pad for CMP of claim 1, wherein the carbon nanotubes of the carbon nanotube layer are embedded in the soft polymer substrate layer and the hard polymer coating layer in an irregular net form structure.

5. The composite polishing pad for CMP of claim 4, wherein the irregular net form structure is a structure formed by scattering the carbon nanotubes so that some thereof overlap each other.

6. The composite polishing pad for CMP of claim 1, wherein the soft polymer substrate layer has shore hardness of 20D to 45D, and the hard polymer coating layer has shore hardness of 45D to 70D.

7. The composite polishing pad for CMP of claim 1, wherein the protrusion has a maximum width of 10 um to 500 um, and a height of 3 um to 150 um.

8. The composite polishing pad for CMP of claim 1, wherein the carbon nanotubes have a diameter of 1 nm to 50 nm, and a length of 1 um to 30 um.

9. The composite polishing pad for CMP of claim 1, wherein the hard polymer coating layer has a thickness of 1 um to 30 um.

10. The composite polishing pad for CMP of claim 1, wherein the protrusion has a hemisphere-like shape.

11. A method for producing a composite polishing pad for CMP, comprising:
(a) preparing a substrate on which carbon nanotubes are arranged in a vertical direction;
(b) forming a soft polymer substrate layer with a flat upper surface by coating a soft polymer on the upper portion of the carbon nanotubes;
(c) separating and removing the substrate from the carbon nanotubes;
(d) exposing a portion of the carbon nanotubes by removing a certain thickness of the soft polymer substrate through plasma etching the substrate-removed surface;
(e) forming a hard polymer coating layer by coating a hard polymer on the carbon nanotube-exposed surface so that an upper surface thereof is flat; and
(f) forming a plurality of protrusions including the soft polymer substrate layer, the carbon nanotube layer arranged in a vertical direction, and the hard polymer coating layer by conducting an embossing treatment from the upper surface direction of the hard polymer coating layer.

12. The method of claim 11, wherein the embossing treatment in (f) above is conducted by pressurizing the upper surface of the hard polymer coating layer with a mold having a plurality of protrusions engraved therein under a heating condition.

13. The method of claim 11, wherein (b) and (e) above are performed under vacuum.

14. A method for producing a composite polishing pad for CMP, comprising:
(a) scattering carbon nanotubes on a mold having a plurality of protrusions engraved therein so that some thereof overlap each other;
(b) forming a soft polymer substrate layer with a flat upper surface by coating a soft polymer on the upper portion of the carbon nanotubes;
(c) demolding the mold;
(d) exposing a portion of the carbon nanotubes by removing a certain thickness of the soft polymer substrate through plasma etching the demolded surface; and
(e) forming a hard polymer coating layer by coating a hard polymer on the carbon nanotube-exposed surface.

15. A method for producing a composite polishing pad for CMP, the method, comprising:
(a) scattering carbon nanotubes on a substrate so that some thereof overlap each other;
(b) forming a soft polymer substrate layer with a flat upper surface by coating a soft polymer on the upper portion of the carbon nanotubes;
(c) separating and removing the substrate from the carbon nanotubes;
(d) exposing a portion of the carbon nanotubes by removing a certain thickness of the soft polymer substrate through plasma etching the substrate-removed surface;
(e) forming a hard polymer coating layer by coating a hard polymer on the carbon nanotube-exposed surface so that an upper surface thereof is flat; and
(f) forming a plurality of protrusions including the soft polymer substrate layer, the carbon nanotube layer arranged in a vertical direction, and the hard polymer coating layer by conducting an embossing treatment from the upper surface direction of the hard polymer coating layer.

16. The method of claim 15, wherein the embossing treatment in (f) above is conducted by pressurizing the upper surface of the hard polymer coating layer with a mold having a plurality of protrusions engraved therein under a heating condition.

17. The method of claim 14 or claim 15, wherein (b) and (e) above are performed under vacuum.
